# EUROPEAN PATENT SPECIFICATION

(11) **EP 3 594 183 B1**
(45) Date of publication and mention of the grant of the patent: **23.06.2021**
(21) Application number: 17734221.9
(22) Date of filing: 25.05.2017
(51) Int. Cl.: C02F 1/00, B01D 35/00, B01D 35/26, B01D 27/14, B01D 27/08, C02F 1/28, C02F 1/44

(54) **WATER PURIFICATION SYSTEM**
WASSERREINIGUNGSSYSTEM
SYSTÈME DE PURIFICATION D'EAU

(30) Priority: 07.03.2017 CN 201710132568; 07.03.2017 CN 201720219849 U
(43) Date of publication of application: 15.01.2020
(73) Proprietor: Foshan Shunde Midea Water Dispenser Mfg. Co., Ltd., Foshan, Guangdong 528311 (CN); Midea Group Co., Ltd., Foshan, Guangdong 528311 (CN)
(72) Inventor: ZHANG, Xingzhi, Foshan Guangdong 528311 (CN); HE, Zhifeng, Foshan Guangdong 528311 (CN)
(74) Representative: Lam, Alvin
(86) International application number: PCT/CN2017/086001
(87) International publication number: WO 2018/161438

(56) References cited:
- CN-A- 104 478 039
- CN-A- 104 528 976
- CN-A- 104 528 976
- CN-A- 104 556 457
- CN-U- 205 346 995
- CN-U- 205 346 995
- JP-A- 2007 136 384
- US-A1- 2016 367 920

## Description

### FIELD

The present disclosure relates to a technical field of water treatment, and more particularly to a water purification system.

### BACKGROUND

In the related art, a common composite filter cartridge in a water purification system includes a filter cartridge of carbon rod plus ultrafiltration, a filter cartridge of PP plus activated carbon, a filter cartridge of granular active carbon plus ultrafiltration, and the like. However, for reasons at aspects of pressure resistance of sealing and performance, there are few composite filter cartridges concerning a nanofiltration membrane or a reverse osmosis membrane. There are only several composite filter cartridges concerning the reverse osmosis membrane, in which a rear-mounted activated carbon filter cartridge for improving mouthfeel is still placed outside of an integral filter cartridge, going against miniaturization of an overall dimension of a machine.

Moreover, a booster pump disposed in the water purification system tends to be blocked during a long-term use, thus affecting the use and service life of the water purification system. Thus, an improvement is needed.

CN104528976A relates to an integral combined filter element and a water purifying system with same. The integral combined filter element comprises an outer shell, a pretreatment filter element and a filter membrane, wherein a chamber is defined in the outer shell; the outer shell is provided with a raw water inlet, a purified water outlet and a waste water outlet which are communicated with the chamber; the pretreatment filter element and the filter membrane are both arranged in the chamber and are sequentially arranged among the raw water inlet, the purified water outlet and the waste water outlet; the outer shell is also provided with a pretreatment water outlet and a pretreatment water inlet which are communicated with the chamber; the pretreatment filter element is positioned between the raw water inlet and the pretreatment water outlet; the filter membrane is positioned among the pretreatment water inlet, the purified water outlet and the waste water outlet.

CN205346995U relates to a kind of composite filter element and has its composite filter element assembly.

### SUMMARY

Embodiments of the present disclosure seek to solve at least one of the problems existing in the related art to at least some extent. For that reason, a water purification system is provided by the present disclosure. The water purification system has a simple structure, a small dimension, a high reliability and a long service life.

The water purification system according to the present invention is set out in claim 1.

In the water purification system according to embodiments of the present disclosure, by disposing the pretreating filter cartridge and the fine filter cartridge in sequence from outside to inside and by arranging the filtering part and the mouthfeel-improving filter cartridge along the up-and-down direction, the whole composite filter cartridge is configured to have a three-dimensional arrangement, such that a diameter of the composite filter cartridge may be reduced, thus facilitating pressure resistance of the filter casing. Further, the composite filter cartridge has a simple structure and a small volume, thus facilitating miniaturization of the whole machine. Moreover, a quality of the water flowing out is good. Also, by disposing the booster pump at the downstream of the pretreating filter cartridge, the water entering the booster pump has been filtered by the pretreating filter cartridge, so that a risk of blocking the booster pump may be reduced, a service life of the water purification system may be improved, and reliability of the water purification system may be improved.

According to some optional embodiments of the present disclosure, the water purification system further includes a water-input solenoid valve connected between the booster pump and the pretreated-water inlet. Thus, by disposing the water-input solenoid valve at the downstream of the pretreating filter cartridge, a risk of blocking the solenoid valve may be reduced, thereby further increasing the service life of the water purification system and further improving reliability of the water purification system.

According to some optional embodiments of the present disclosure, the raw-water inlet and the pretreated-water inlet are located at an upper end of the filter casing, the pretreated-water outlet, the purified-water outlet and the concentrated-water outlet are located at a lower end of the filter casing. Thus, the raw-water inlet, the pretreated-water outlet, the pretreated-water inlet, the purified-water outlet and the concentrated-water outlet may be arranged in the filter casing reasonably, thereby facilitating a design of water passages in the composite filter cartridge assembly.

According to some optional embodiments of the present disclosure, the mouthfeel-improving filter cartridge is located above the filtering part. Thus, a structure of the whole composite filter cartridge assembly is reasonable and steady.

According to embodiments of the present disclosure, the fine filter cartridge includes a central water-collecting pipe and a fine filter membrane winding around the central water-collecting pipe, the raw-water inlet is communicated with a water-input end of the pretreating filter cartridge. The composite filter cartridge further includes: a first end cover configured to have an annular shape, disposed at a first end of the filtering part and connected to the pretreating filter cartridge; and a second end cover including an end-cover body configured to have an annular shape and a partition plate configured to have a cylindrical shape and extending along an axial direction from an end of the end-cover body, in which the end-cover body is disposed at a second end of the filtering part and is connected to the pretreating filter cartridge, the partition plate is located between the pretreating filter cartridge and the fine filter cartridge so as to partition the pretreating filter cartridge from the fine filter cartridge. The mouthfeel-improving filter cartridge is disposed in the end-cover body, the mouthfeel-improving filter cartridge is connected to the central water-collecting pipe and has a purified-water passage which is configured to be flowed out of by the purified water, the purified-water passage is communicated with the purified-water outlet, a concentrated-water passage and a circulation passage, which are arranged in sequence from outside to inside and spaced apart from each other, are defined between the mouthfeel-improving filter cartridge and the second end cover, the circulation passage is communicated with the central water-collecting pipe, the concentrated-water outlet is communicated with the concentrated-water passage.

Thus, by providing the first end cover and the second end cover, the composite filter cartridge is easy to mount and assemble. Furthermore, disposing the mouthfeel-improving filter cartridge in the second end cover facilitates the design of water passages in the composite filter cartridge, allows the structure of the water passages in the composite filter cartridge to be simple, and also ensures the quality of the water flowing out.

According to a further embodiment of the present disclosure, the water purification system further includes a connecting shell disposed in the end-cover body and connected to the central water-collecting pipe, in which the concentrated-water passage is defined between the connecting shell and the second end cover, the mouthfeel-improving filter cartridge is disposed in the connecting shell, and the circulation passage is defined between the mouthfeel-improving filter cartridge and an inner wall of the connecting shell. Thus, by providing the connecting shell, the mouthfeel-improving filter cartridge is easy to assemble, and the mouthfeel-improving filter cartridge is easily separated from the filtering part.

Optionally, a protruding block is provided between the inner wall of the connecting shell and the mouthfeel-improving filter cartridge so as to space the inner wall of the connecting shell apart from the mouthfeel-improving filter cartridge, and a gap between the inner wall of the connecting shell and the mouthfeel-improving filter cartridge is configured as the circulation passage. Thus, by providing the protrusion, the circulation passage is easy to form.

Optionally, the connecting shell is provided with an annular protrusion, and a water-output end of the central water-collecting pipe is fitted in the annular protrusion. Thus, it is easy to connect the mouthfeel-improving filter cartridge with the fine filter cartridge quickly and reliably.

The water purification system includes a first positioning member and a second positioning member, in which the first positioning member and the second positioning member are disposed at two axial ends of the mouthfeel-improving filter cartridge respectively and are connected to the mouthfeel-improving filter cartridge. Thus, by providing the first positioning member and the second positioning member, the mouthfeel-improving filter cartridge 123 may be easily positioned in the connecting shell 126.

Furthermore, the mouthfeel-improving filter cartridge is configured to be tubular and has an inner hole configured as the purified-water passage, the first positioning member includes a first positioning body and a first position limiting protrusion provided to the first positioning body, the first positioning body covers a first end of the mouthfeel-improving filter cartridge adjacent to the central water-collecting pipe, the first position limiting protrusion is fitted in the inner hole of the mouthfeel-improving filter cartridge, the second positioning member includes a second positioning body and a second position limiting protrusion provided to the second positioning body, the second positioning body is provided to a second end of the mouthfeel-improving filter cartridge away from the central water-collecting pipe, the second position limiting protrusion is fitted in the inner hole of the mouthfeel-improving filter cartridge and the second position limiting protrusion has a water hole running through the second positioning member along an axial direction.

Thus, by configuring the mouthfeel-improving filter cartridge to be tubular, the purified-water passage in the mouthfeel-improving filter cartridge may be easy to form. Moreover, with the first position limiting protrusion of the first positioning member and the second position limiting protrusion of the second positioning member being fitted in the inner hole of the mouthfeel-improving filter cartridge respectively, the mouthfeel-improving filter cartridge may be mounted and positioned easily and quickly, and the structure of the flow passages in the composite filter cartridge may be simple.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the drawings, in which:
Fig. 1 is a schematic view of a water purification system according to an embodiment of the present disclosure;
Fig. 2 is a schematic view of a composite filter cartridge assembly according to an embodiment of the present disclosure;
Fig. 3 is a schematic view of a composite filter cartridge according to an embodiment of the present disclosure;
Fig. 4 is an enlarged view of portion A in Fig. 3.

### Reference numerals:

water purification system 100,
composite filter cartridge assembly 1,
filter casing 11, raw-water inlet 111, purified-water outlet 112, concentrated-water outlet 113, pretreated-water outlet 114, pretreated-water inlet 115,
composite filter cartridge 12, pretreating filter cartridge 121, fine filter cartridge 122, central water-collecting pipe 1221, fine filter membrane 1222, mouthfeel-improving filter cartridge 123,
first end cover 124, first turn-up portion 1241, second turn-up portion 1242, first accommodating cavity 1243,
second end cover 125, end-cover body 1251, third turn-up portion 12511, partition plate 1252, second accommodating cavity 1253,
connecting shell 126, protruding block 1261, annular protrusion 1262, through hole 1263, sealing member 1264,
first positioning member 127, first positioning body 1271, fifth turn-up portion 1272, first position limiting protrusion 1273,
second positioning member 128, second positioning body 1281, sixth turn-up portion 1282, second position limiting protrusion 1283, water hole 1284,
water-input solenoid valve 3, booster pump 4, check valve 5, high-pressure switch 6, waste-water solenoid valve 7, faucet 8,
concentrated-water passage a1, circulation passage a2, purified-water passage a3,
water-input pipeline b1, purified-water pipeline b2, concentrated-water pipeline b3, pretreating pipeline b4.

### DETAILED DESCRIPTION

Reference will be made in detail to embodiments of the present disclosure. The same or similar elements and the elements having same or similar functions are denoted by like reference numerals throughout the descriptions. The embodiments described herein with reference to drawings are explanatory, illustrative, and used to generally understand the present disclosure. The embodiments shall not be construed to limit the present disclosure.

In the specification, it is to be understood that terms such as "central," "up," "down," "vertical," "horizontal," "top," "bottom," "inner," "outer," "axial," "radial," and "circumferential" should be construed to refer to the orientation as then described or as shown in the drawings under discussion. These relative terms are for convenience of description and do not require that the present disclosure be constructed or operated in a particular orientation. In addition, terms such as "first" and "second" are used herein for purposes of description and are not intended to indicate or imply relative importance or significance or to imply the number of indicated technical features. Thus, the feature defined with "first" and "second" may comprise one or more of this feature. In the description of the present disclosure, "a plurality of' means two or more than two, unless specified otherwise.

In the present disclosure, it should be noted that, unless specified or limited otherwise, the terms "mounted," "connected," "coupled," "fixed" and the like are used broadly, and may be, for example, fixed connections, detachable connections, or integral connections; may also be mechanical or electrical connections; may also be direct connections or indirect connections via intervening structures; may also be inner communications of two elements, which can be understood by those skilled in the art according to specific situations.

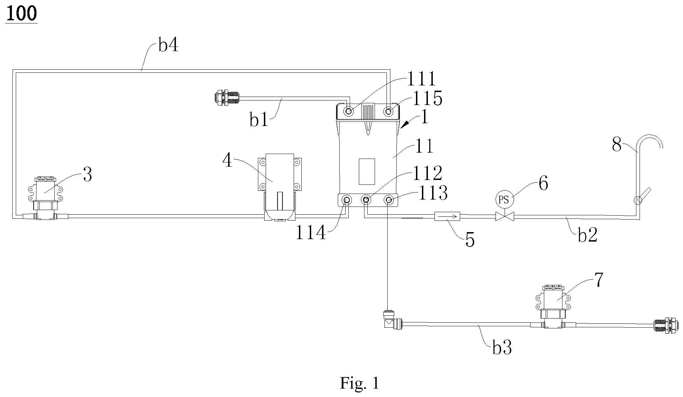

A water purification system 100 according to embodiments of the present disclosure will be described with reference to Figs. 1-4.

As shown in Figs. 1-4, the water purification system 100 according to embodiments of the present disclosure includes a composite filter cartridge assembly 1, a booster pump 4 and a waste-water solenoid valve 7.

Specifically, the composite filter cartridge assembly 1 includes a filter casing 11 and a composite filter cartridge 12 disposed in the filter casing 11. The composite filter cartridge 12 includes a filtering part and a mouthfeel-improving filter cartridge 123 which are arranged along an up-and-down direction. The filtering part includes a pretreating filter cartridge 121 and a fine filter cartridge 122 which are disposed in sequence from outside to inside and spaced apart from each other. The mouthfeel-improving filter cartridge 123 is connected to the fine filter cartridge 122 and located at the downstream of the fine filter cartridge 122. By disposing the pretreating filter cartridge 121 and the fine filter cartridge 122 of the filtering part in sequence from outside to inside and by arranging the filtering part and the mouthfeel-improving filter cartridge 123 along the up-and-down direction, the whole composite filter cartridge 12 is configured to have a three-dimensional arrangement, such that a diameter of the composite filter cartridge 12 may be reduced, thus facilitating a pressure resistance of the filter casing 11. Further, the composite filter cartridge 12 has a simple structure and a small volume, thus facilitating miniaturization of the whole machine. Moreover, a quality of the water flowing out is good.

The pretreating filter cartridge 121 may be configured as a PAC (PP And C, PP cotton and activated carbon composite filter cartridge 12) pretreating filter cartridge 121. For example, the pretreating filter cartridge 121 may include a PP-nonwoven winding layer (a precision of the PP-nonwoven winding layer may be configured to be 5µm) and an activated-carbon-fiber winding layer which are arranged in sequence from outside to inside along a radial direction of the composite filter cartridge 12. The pretreating filter cartridge 121 may effectively remove iron rust and silt, and may also absorb foreign color, foreign smell, residual chlorine as well as partial organic matters in the water, thus ensuring a good quality of the water entering the fine filter cartridge 122 and extending a service life of the fine filter cartridge 122. The mouthfeel-improving filter cartridge 123 may be configured as an activated carbon layer. For example, the mouthfeel-improving filter cartridge 123 may be configured as an activated carbon rod. The mouthfeel-improving filter cartridge 123 may remove volatile organic matters, residual chlorine and may also retain necessary mineral substances such as trace calcium, silicic acid and carbonate, so that a sweet and soft mouthfeel may be provided.

The filter casing 11 has a raw-water inlet 111, a pretreated-water outlet 114, a pretreated-water inlet 115, a purified-water outlet 112 and a concentrated-water outlet 113. The pretreated-water outlet 114 is communicated with a water-output end of the pretreating filter cartridge 121, and the pretreated-water inlet 115 is communicated with a water-input end of the fine filter cartridge 122. A first end of the booster pump 4 is connected to the pretreated-water outlet 114 and a second end of the booster pump 4 is connected to the pretreated-water inlet 115. The booster pump 4 is used for transporting the water flowing out of the pretreated-water outlet 114 to the pretreated-water inlet 115. Thus, by disposing the booster pump 4 at the downstream of the pretreating filter cartridge 121, the water entering the booster pump 4 has been filtered by the pretreating filter cartridge 121, so that a risk of blocking the booster pump 4 may be reduced, a service life of the water purification system 100 may be improved, and reliability of the water purification system 100 may be improved. Moreover, by separating the pretreating filter cartridge 121 from the fine filter cartridge 122, the water treated by the pretreating filter cartridge 121 may be prevented from entering the fine filter cartridge 122 directly to be filtered without being pressurized by the booster pump 4.

The waste-water solenoid valve 7 is connected to the concentrated-water outlet 113. The waste-water solenoid valve 7 is used for adjusting a proportion of waste water, so as to balance a working pressure of the water purification system 100.

A working process of the water purification system 100 may be described briefly with reference to Figs. 1-4.

Referring to Figs. 1-4, raw water enters the filter casing 11 through the raw-water inlet 111 in the filter casing 11 and is primarily filtered by the pretreating filter cartridge 121 of the filtering part. The water after being primarily filtered by the pretreating filter cartridge 121 flows out of the composite filter cartridge assembly 1 through the pretreated-water outlet 114 in the filter casing 11 and is pressurized by the booster pump 4. Thus, the raw water may be primarily filtered before entering the booster pump 4, so as to reduce the risk of blocking the booster pump 4. The pressurized water flows into the composite filter cartridge assembly 1 through the pretreated-water inlet 115 in the filter casing 11 and is finely filtered by the fine filter cartridge 122. The purified water obtained by filtration of the fine filter cartridge 122 is filtered by the mouthfeel-improving filter cartridge 123 to improve mouthfeel thereof, and finally the purified water whose mouthfeel has been improved flows out of the purified-water outlet 112 in the filter casing 11 to be drunk. The generated concentrated water flows out of the composite filter cartridge assembly 1 through the concentrated-water outlet 113 in the filter casing 11 and is discharged out of the water purification system 100 through the waste-water solenoid valve 7.

In the water purification system 100 according to embodiments of the present disclosure, by disposing the pretreating filter cartridge 121 and the fine filter cartridge 122 of the filtering part in sequence from outside to inside and by arranging the filtering part and the mouthfeel-improving filter cartridge 123 along the up-and-down direction, the composite filter cartridge 12 is configured to have the three-dimensional arrangement, such that the diameter of the composite filter cartridge 12 may be reduced, thus facilitating the pressure resistance of the filter casing 11. Further, the composite filter cartridge 12 has a simple structure and a small volume, thus facilitating miniaturization of the whole machine. Moreover, a quality of the water flowing out is good. Also, by disposing the booster pump 4 at the downstream of the pretreating filter cartridge 121, the water entering the booster pump 4 has been filtered by the pretreating filter cartridge 121, so that a risk of blocking the booster pump 4 may be reduced, a service life of the water purification system 100 may be improved, and reliability of the water purification system 100 may be improved.

According to some optional embodiments of the present disclosure, referring to Fig. 1, the water purification system 100 further includes a water-input solenoid valve 3, and the water-input solenoid valve 3 is connected between the booster pump 4 and the pretreated-water inlet 115. Thus, by disposing the water-input solenoid valve 3 at the downstream of the pretreating filter cartridge 121, a risk of blocking the water-input solenoid valve 3 may be reduced, thus further enhancing the service life of the water purification system 100 and further improving the reliability of the water purification system 100.

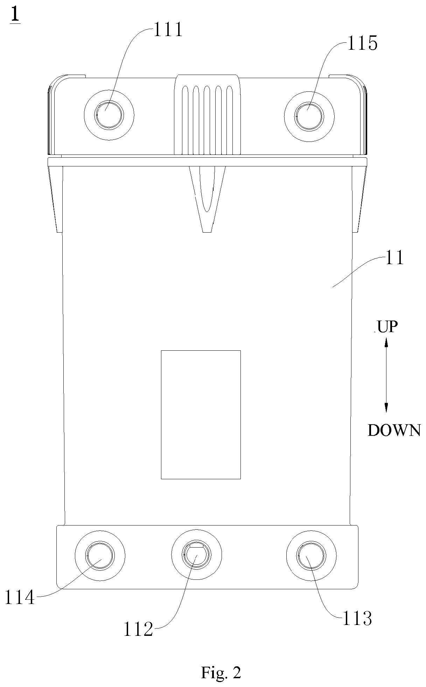

According to some optional embodiments of the present disclosure, referring to Fig. 2, the raw-water inlet 111 and the pretreated-water inlet 115 are located at an upper end of the filter casing 11. The pretreated-water outlet 114, the purified-water port 116, the purified-water outlet 112 and the concentrated-water outlet 113 are located at a lower end of the filter casing 11. Thus, the raw-water inlet 111, the pretreated-water outlet 114, the pretreated-water inlet 115, the purified-water port 116, the purified-water outlet 112 and the concentrated-water outlet 113 are arranged in the filter casing 11 reasonably, thereby facilitating a design of water passages in the composite filter cartridge assembly 1.

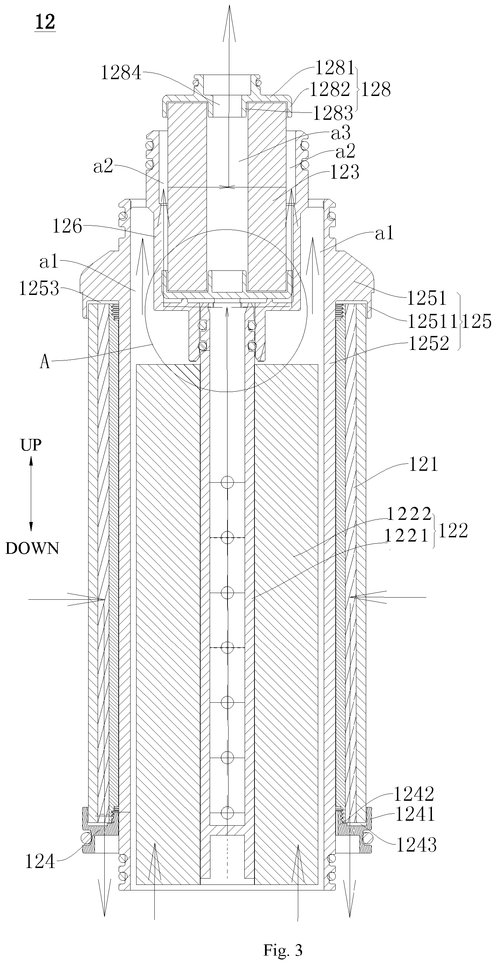

According to some optional embodiments of the present disclosure, referring to Fig. 3, the mouthfeel-improving filter cartridge 123 is located above the filtering part. Thus, by disposing the mouthfeel-improving filter cartridge 123 above the filtering part, a structure of the whole composite filter cartridge 12 may be reasonable and steady, and it is convenient for a design of flow passages in the composite filter cartridge 12.

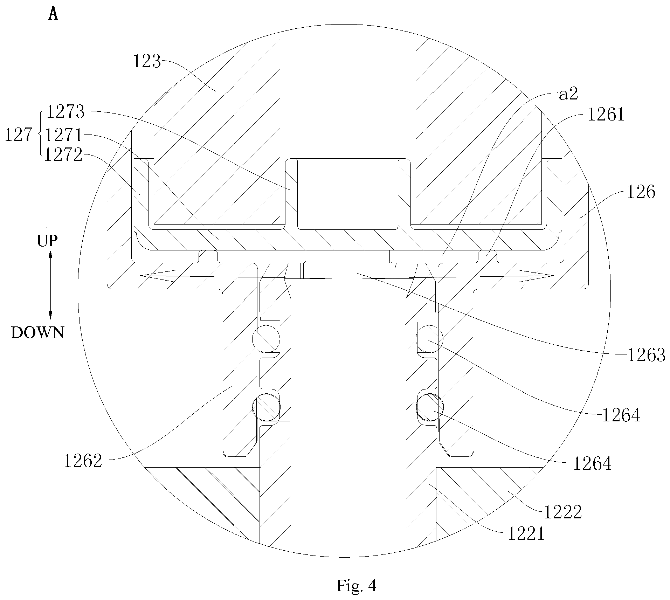

According to some optional embodiments of the present disclosure, referring to Fig. 3 and Fig. 4, the fine filter cartridge 122 includes a central water-collecting pipe 1221 and a fine filter membrane 1222 winding around the central water-collecting pipe 1221. The raw-water inlet 111 is communicated with a water-input end of the pretreating filter cartridge 121. The fine filter membrane 1222 of the fine filter cartridge 122 may be configured as a reverse osmosis membrane or a nanofiltration membrane. The fine filter cartridge 122 may intercept bacterial viruses, heavy metals and the like. The fine filter cartridge 122 may be formed by a multi-membrane winding technology, thus improving the performance of the fine filter cartridge 122.

The composite filter cartridge 12 further includes a first end cover 124 and a second end cover 125. The first end cover 124 is configured to have an annular shape. The first end cover 124 is disposed at a first end of the filtering part (for example, referring to Fig. 3, the first end cover 124 is disposed at a lower end of the filtering part) and is connected to the pretreating filter cartridge 121. For example, in the embodiment shown in Fig. 3, the first end cover 124 is provided with a first turn-up portion 1241 extending upwards at a circumferential edge thereof and also a second turn-up portion 1242 located at an inner side of the first turn-up portion 1241, and the second turn-up portion 1242 is spaced apart from the first turn-up portion 1241 in a radial direction of the first end cover 124. A first accommodating cavity 1243 is formed between the first turn-up portion 1241 and the second turn-up portion 1242, and the first accommodating cavity 1243 has an annular shape. A lower end of the pretreating filter cartridge 121 is accommodated in the above first accommodating cavity 1243 and is closely fitted with an inner side wall of the first turn-up portion 1241 and an outer side wall of the second turn-up portion 1242.

The second end cover 125 includes an end-cover body 1251 having an annular shape and a partition plate 1252 having a cylindrical shape and extending along an axial direction (an up-and-down direction in Fig. 3) from an end (a lower end of the end-cover body 1251 in Fig. 3) of the end-cover body 1251. The end-cover body 1251 is disposed at a second end of the filtering part (for example, referring to Fig. 3, the end-cover body 1251 is disposed at an upper end of the filtering part) and is connected to the pretreating filter cartridge 121. The partition plate 1252 is located between the pretreating filter cartridge 121 and the fine filter cartridge 122 so as to partition the pretreating filter cartridge 121 from the fine filter cartridge 122. Thus, the pretreating filter cartridge 121 is partitioned from the fine filter cartridge 122 easily, so as to prevent the water after being treated by the pretreating filter cartridge 121 from entering the fine filter cartridge 122 directly to be filtered without being pressurized by the booster pump 4. Further, the lower end of the end-cover body 1251 is provided with a third turn-up portion 12511 extending downwards at an outer circumferential edge thereof. A second accommodating cavity 1253 is formed between the third turn-up portion 12511 and the partition plate 1252 described above, and the second accommodating cavity 1253 has an annular shape. An upper end of the pretreating filter cartridge 121 is accommodated in the second accommodating cavity 1253 and is closely fitted with an inner side wall of the third turn-up portion 12511 and an outer side wall of the partition plate 1252, so that the second end cover 125 may be steadily and reliably connected to the pretreating filter cartridge 121.

The mouthfeel-improving filter cartridge 123 is disposed in the end-cover body 1251, connected to the central water-collecting pipe 1221 and has a purified-water passage a3, in which the purified water flows out of the purified-water passage a3. The purified-water passage a3 is communicated with the purified-water outlet 112. A concentrated-water passage a1 and a circulation passage a2, which are arranged in sequence from outside to inside and spaced apart from each other, are defined between the mouthfeel-improving filter cartridge 123 and the second end cover 125. The circulation passage a2 is communicated with the central water-collecting pipe 1221. The concentrated-water outlet 113 is communicated with the concentrated-water passage a1.

Thus, by providing the first end cover 124 and the second end cover 125, it is easy to mount and assemble of the composite filter cartridge 12. Further, disposing the mouthfeel-improving filter cartridge 123 in the second end cover 125 facilitates the design of water passages in the composite filter cartridge 12, allows the structure of the water passages in the composite filter cartridge 12 to be simple, and also ensures the quality of the water flowing out.

A filtration process of the composite filter cartridge 12 will be described briefly with reference to Figs. 1-4.

Referring to Fig. 3 (an arrow direction in the drawing refers to a flow direction of the water) in combination with Figs. 1-2 and Fig. 4, the raw water is primarily filtered by the pretreating filter cartridge 121 firstly, and the water after being primarily filtered by the pretreating filter cartridge 121 flows out of the composite filter cartridge assembly 1 through the pretreated-water outlet 114 in the filter casing 11 and is pressurized by the booster pump 4. The pressurized water flows into the composite filter cartridge assembly 1 through the pretreated-water inlet 115 in the filter casing 11 and is finely filtered by the fine filter cartridge 122. The purified water obtained after filtration of the fine filter cartridge 122 is collected by the central water-collecting pipe 1221 of the fine filter cartridge 122, and the purified water in the central water-collecting pipe 1221 further flows into the mouthfeel-improving filter cartridge 123 through the circulation passage a2 to be filtered so as to improve the mouthfeel thereof. The purified water whose mouthfeel has been improved flows out through the purified-water passage a3 in the mouthfeel-improving filter cartridge 123 and the purified-water outlet 112 in the filter casing 11 so as to be drunk. Moreover, the generated concentrated water is discharged out of the water purification system 100 through the concentrated-water passage a1 and the concentrated-water outlet 113 in the filter casing 11.

According to a further embodiment of the present disclosure, referring to Figs. 3 and 4, the water purification system 100 also includes a connecting shell 126. The connecting shell 126 is disposed in the end-cover body 1251 and is connected to the central water-collecting pipe 1221. The concentrated-water passage a1 is defined between the connecting shell 126 and the second end cover 125. The mouthfeel-improving filter cartridge 123 is disposed in the connecting shell 126. The circulation passage a2 is defined between the mouthfeel-improving filter cartridge 123 and an inner wall of the connecting shell 126. Thus, by providing the connecting shell 126, it is easy to assemble the mouthfeel-improving filter cartridge 123, and it is also convenient to separate the mouthfeel-improving filter cartridge 123 from the filtering part.

Optionally, referring to Fig. 4, a protruding block 1261 is provided between the inner wall of the connecting shell 126 and the mouthfeel-improving filter cartridge 123 so as to space the inner wall of the connecting shell 126 apart from the mouthfeel-improving filter cartridge 123, and thus a gap between the inner wall of the connecting shell 126 and the mouthfeel-improving filter cartridge 123 is configured as the circulation passage a2. Thus, by providing the protruding block 1261, the inner wall of the connecting shell 126 is spaced apart from the mouthfeel-improving filter cartridge 123, so as to form the above circulation passage a2 between the mouthfeel-improving filter cartridge 123 and the inner wall of the connecting shell 126, so that the water flowing out of the central water-collecting pipe 1221 of the fine filter cartridge 122 may flow smoothly into the mouthfeel-improving filter cartridge 123 to be filtered. Optionally, the above protruding block 1261 may be provided to the inner wall of the connecting shell 126. One protruding block 1261 may be provided and configured to have an annular shape. The protruding block 1261 may also be configured to have a rod shape and a plurality of protruding blocks 1261 which are spaced apart from one another may be provided.

Optionally, referring to Fig. 3 and Fig. 4, the connecting shell 126 is provided with an annular protrusion 1262, and a water-output end (an upper end of the central water-collecting pipe 1221 in Fig. 3 and Fig. 4) of the central water-collecting pipe 1221 is fitted in the annular protrusion 1262. Thus, with the central water-collecting pipe 1221 being fitted in the annular protrusion 1262 of the connecting shell 126, it is convenient to connect the mouthfeel-improving filter cartridge 123 to the fine filter cartridge 122 quickly and reliably, and the purified water in the central water-collecting pipe 1221 may flow smoothly into the connecting shell 126.

Furthermore, referring to Fig. 4, a sealing member 1264 (for example a sealing ring) may be provided between an inner circumferential wall of the above annular protrusion 1262 and an outer circumferential wall of the central water-collecting pipe 1221, so as to ensure the sealing property of the connection between the connecting shell 126 and the central water-collecting pipe 1221, thus preventing the concentrated water in the concentrated-water passage a1 from entering the connecting shell 126.

Optionally, referring to Fig. 3 and Fig. 4, the water purification system 100 also includes a first positioning member 127 and a second positioning member 128. The first positioning member 127 and the second positioning member 128 are disposed at two axial ends of the mouthfeel-improving filter cartridge 123 respectively and are connected to the mouthfeel-improving filter cartridge 123. Thus, by providing the first positioning member 127 and the second positioning member 128, a position of the mouthfeel-improving filter cartridge 123 may be limited in an axial direction (the up-and-down direction in Fig. 3), so that the mouthfeel-improving filter cartridge 123 may be easily positioned in the connecting shell 126, and thus the structure of the composite filter cartridge 12 may be steady and reliable.

Furthermore, referring to Fig. 3 and Fig. 4, the mouthfeel-improving filter cartridge 123 is configured to be tubular. Both the two axial ends of the mouthfeel-improving filter cartridge 123 may be open, so that the mouthfeel-improving filter cartridge 123 has a simple structure and is easy to process and mold. An inner hole of the mouthfeel-improving filter cartridge 123 is configured as the purified-water passage a3, so that it is not needed to provide the purified-water passage a3 to the mouthfeel-improving filter cartridge 123 additionally. The first positioning member 127 includes a first positioning body 1271 and a first position limiting protrusion 1273 provided to the first positioning body 1271. The first positioning body 1271 covers a first end (a lower end of the mouthfeel-improving filter cartridge 123 in Fig. 3) of the mouthfeel-improving filter cartridge 123 adjacent to the central water-collecting pipe 1221, so that the purified-water passage a3 in the mouthfeel-improving filter cartridge 123 is separated from the central water-collecting pipe 1221, and thus the water in the central water-collecting pipe 1221 is prevented from entering the purified-water passage a3 directly without passing through the mouthfeel-improving filter cartridge 123. The first position limiting protrusion 1273 is fitted in the inner hole of the mouthfeel-improving filter cartridge 123.

The second positioning member 128 includes a second positioning body 1281 and a second position limiting protrusion 1283 provided to the second positioning body 128. The second positioning body 1281 is provided to a second end (an upper end of the mouthfeel-improving filter cartridge 123 in Fig. 3) of the mouthfeel-improving filter cartridge 123 away from the central water-collecting pipe 1221. The second position limiting protrusion 1283 is fitted in the inner hole of the mouthfeel-improving filter cartridge 123, and the second position limiting protrusion 1283 has a water hole 1284 running through the second positioning member 128 along the axial direction, so that the purified water in the purified-water passage a3 may flow out of the water hole 1284 in the second positioning member 128 so as to be drunk.

Thus, by configuring the mouthfeel-improving filter cartridge 123 to be tubular, the purified-water passage a3 in the mouthfeel-improving filter cartridge 123 may be formed easily. Moreover, since the first position limiting protrusion 1273 of the first positioning member 127 and the second position limiting protrusion 1283 of the second positioning member 128 are fitted in the inner hole of the mouthfeel-improving filter cartridge 123 respectively, the mouthfeel-improving filter cartridge 123 may be mounted and positioned easily and quickly, and the structure of the flow passages in the composite filter cartridge 12 may be simple.

The water purification system 100 according to a specific embodiment of the present disclosure will be described with reference to Figs. 1-4.

Referring to Figs. 1-4, in the present embodiment, the water purification system 100 includes the composite filter cartridge assembly 1, the booster pump 4 and the waste-water solenoid valve 7 described above. Further, the water purification system 100 also includes a water-input pipeline b1, a purified-water pipeline b2, a concentrated-water pipeline b3, a pretreating pipeline b4, the water-input solenoid valve 3, a check valve 5, a high-pressure switch 6, and a faucet 8.

The composite filter cartridge assembly 1 includes the filter casing 11 and the composite filter cartridge 12 described above. The composite filter cartridge 12 includes the filtering part, the first end cover 124, the second end cover 125, the mouthfeel-improving filter cartridge 123, the connecting shell 126, the first positioning member 127 and the second positioning member 128 described above. Furthermore, the filtering part includes the pretreating filter cartridge 121 and the fine filter cartridge 122 described above. The first end cover 124 is provided to a bottom portion of the filtering part and is connected to both the pretreating filter cartridge 121 and the fine filter cartridge 122. The second end cover 125 is provided to a top portion of the filtering part and is connected to the pretreating filter cartridge 121. The connecting shell 126 is disposed in the second end cover 125. An upper end of the connecting shell 126 is open and a lower end of the connecting shell 126 has a through hole 1263 communicating with an inner cavity of the connecting shell 126. The annular protrusion 1262 is provided to a circumferential edge of the through hole 1263 and extends downwards, and the upper end of the central water-collecting pipe 1221 is fitted in the annular protrusion 1262.

The mouthfeel-improving filter cartridge 123 is disposed in the connecting shell 126, and the first positioning member 127 and the second positioning member 128 are respectively provided to the lower end and the upper end of the mouthfeel-improving filter cartridge 123. A bottom wall of the connecting shell 126 is provided with the protruding block 1261 described above, the first positioning member 127 is placed in the connecting shell 126 and the first positioning body 1271 of the first positioning member 127 is supported on the above protruding block 1261, so that the first positioning body 1271 is spaced apart from the bottom wall of the connecting shell 126, and thus the purified water in the central water-collecting pipe 1221 may smoothly flow into the circulation passage a2 in the connecting shell 126.

The first positioning body 1271 is configured to be round, and the first positioning body 1271 is provided with a fifth turn-up portion 1272 extending upwards at a circumferential edge thereof. The lower end of the mouthfeel-improving filter cartridge 123 abuts against an inner circumferential wall of the fifth turn-up portion 1272, thereby further improving stability of the fit between the first positioning member 127 and the mouthfeel-improving filter cartridge 123. The fifth turn-up portion 1272 is spaced apart from an inner circumferential wall of the connecting shell 126, in which case a gap between the first positioning member 127 and the inner wall of the connecting shell 126, and a gap between an outer circumferential wall of the mouthfeel-improving filter cartridge 123 and the inner wall of the connecting shell 126 together constitute the circulation passage a2 described above. The second positioning body 1281 is configured to be round, and the second positioning body 1281 is provided with a sixth turn-up portion 1282 extending downwards at a circumferential edge thereof. The upper end of the mouthfeel-improving filter cartridge 123 abuts against an inner circumferential wall of the sixth turn-up portion 1282, thereby further improving stability of the fit between the second positioning member 128 and the mouthfeel-improving filter cartridge 123.

The water-input pipeline b1 is connected to the raw-water inlet 111 in the filter casing 11. A first end of the pretreating pipeline b4 is connected to the pretreated-water outlet and a second end of the pretreating pipeline b4 is connected to the pretreated-water inlet. The booster pump 4 and the water-input solenoid valve 3 are connected in series in the pretreating pipeline b4 along the flow direction of the water. The purified-water pipeline b2 is connected to the purified-water outlet 112 in the filter casing 11. The check valve 5, the high-pressure switch 6 and the faucet 8 are sequentially connected in series in the purified-water pipeline b2 along the flow direction of the water. The check valve 5 is configured to allow the purified water to unidirectionally flow therethrough in a direction from the purified-water outlet 112 to the faucet 8. The check valve 5 is used for preventing the water in the purified-water pipeline b2 from returning into the composite filter cartridge 12. The high-pressure switch 6 may detect whether the faucet 8 is at an on state or an off state according to a water pressure in the purified-water pipeline b2.

Thus, when the faucet 8 is on, the water purification system 100 starts working. The water-input solenoid valve 3 is opened, the high-pressure switch 6 is turned on, and the raw water enters the raw-water pipeline and flows into the composite filter cartridge assembly 1 through the raw-water inlet 111 in the filter casing 11. The raw water flowing into the composite filter cartridge assembly 1 is primarily filtered by the pretreating filter cartridge 121 firstly, and the water after being primarily filtered by the pretreating filter cartridge 121 flows out of the composite filter cartridge assembly 1 through the pretreated-water outlet 114 in the filter casing 11 and flows into the pretreating pipeline b4. After being pressurized by the booster pump 4, the water flowing into the pretreating pipeline b4 flows into the composite filter cartridge assembly 1 through the pretreated-water inlet 115 in the filter casing 11 and is finely filtered by the fine filter cartridge 122.

The purified water obtained by filtration of the fine filter cartridge 122 is collected by the central water-collecting pipe 1221 of the fine filter cartridge 122, and the purified water in the central water-collecting pipe 1221 flows into the mouthfeel-improving filter cartridge 123 through the above circulation passage a2 to be filtered so as to improve the mouthfeel thereof. The purified water whose mouthfeel is improved flows out through the purified-water passage a3 in the mouthfeel-improving filter cartridge 123 and the purified-water outlet 112 in the filter casing 11, further flows into the purified-water pipeline b2, and finally flows out of the faucet 8 to be drunk. Moreover, the generated concentrated water flows into the concentrated-water pipeline b3 through the concentrated-water passage a1 and the concentrated-water outlet 113 in the filter casing 11, and finally is discharged out of the water purification system 100 after passing through the waste-water solenoid valve 7.

Reference throughout this specification to "an embodiment," "some embodiments," "one embodiment", "another example," "an example," "a specific example," or "some examples," means that a particular feature, structure, material, or characteristic described in connection with the embodiment or example is included in at least one embodiment or example of the present disclosure. Thus, the appearances of the phrases such as "in some embodiments," "in one embodiment", "in an embodiment", "in another example," "in an example," "in a specific example," or "in some examples," in various places throughout this specification are not necessarily referring to the same embodiment or example of the present disclosure. Furthermore, the particular features, structures, materials, or characteristics may be combined in any suitable manner in one or more embodiments or examples.

## Claims

1. A water purification system (100), comprising:
a composite filter cartridge assembly (1) comprising a filter casing (11) and a composite filter cartridge (12) disposed in the filter casing (11), wherein
the filter casing (11) has a raw-water inlet (111), a pretreated-water outlet (114), a pretreated-water inlet (115), a purified-water outlet (112) and a concentrated-water outlet (113),
the composite filter cartridge (12) comprises a filtering part and a mouthfeel-improving filter cartridge (123) which are arranged along an up-and-down direction, the filtering part comprises a pretreating filter cartridge (121) and a fine filter cartridge (122) which are disposed in sequence from outside to inside and spaced apart from each other, the mouthfeel-improving filter cartridge (123) is an activated carbon filter and is connected to the fine filter cartridge (122) and is located at the downstream of the fine filter cartridge (122), the pretreated-water outlet (114) is communicated with a water-output end of the pretreating filter cartridge (121), the pretreated-water inlet (115) is communicated with a water-input end of the fine filter cartridge (122), wherein the fine filter cartridge (122) comprises a central water-collecting pipe (1221) and a fine filter membrane (1222) winding around the central water-collecting pipe (1221), the raw-water inlet (111) is communicated with a water-input end of the pretreating filter cartridge (121),
The composite filter cartridge further comprising a first end cover (124) configured to have an annular shape, disposed at a first end of the filtering part and connected to the pretreating filter cartridge (121), and
a second end cover (125) comprising an end-cover body (1251) configured to have an annular shape and a partition plate (1252) configured to have a cylindrical shape and extending along an axial direction from an end of the end-cover body (1251), wherein the end-cover body (1251) is disposed at a second end of the filtering part and is connected to the pretreating filter cartridge (121), the partition plate (1252) is located between the pretreating filter cartridge (121) and the fine filter cartridge (122) so as to partition the pretreating filter cartridge (121) from the fine filter cartridge (122), wherein the mouthfeel-improving filter cartridge (123) is disposed in the end-cover body (1251), the mouthfeel-improving filter cartridge (123) is connected to the central water-collecting pipe (1221) and has a purified-water passage (a3) which is configured to be flowed out of by the purified water, the purified-water passage is communicated with the purified-water outlet (112), a concentrated-water passage (a1) and a circulation passage (a2), which are arranged in sequence from outside to inside and spaced apart from each other, are defined between the mouthfeel-improving filter cartridge (123) and the second end cover (125), the circulation passage is communicated with the central water-collecting pipe (1221), the concentrated-water outlet (113) is communicated with the concentrated-water passage (a1);
the water purification system further comprising a connecting shell (126) disposed in the end-cover body (1251) and connected to the central water-collecting pipe (1221), wherein the concentrated-water passage (a3) is defined between the connecting shell (126) and the second end cover (125), the mouthfeel-improving filter cartridge (123) is disposed in the connecting shell (126), and the circulation passage (a2) is defined between the mouthfeel-improving filter cartridge (123) and an inner wall of the connecting shell (126);
a booster pump (4) having a first end connected to the pretreated-water outlet (114) and a second end connected to the pretreated-water inlet (115), wherein the booster pump (4) is configured for transporting water flowing out of the pretreated-water outlet (114) to the pretreated-water inlet (115);
a waste-water solenoid valve (7) connected to the concentrated-water outlet (113); and
a first positioning member (127) and a second positioning member (128), wherein the first positioning member (127) and the second positioning member (128) are disposed at two axial ends of the mouthfeel-improving filter cartridge (123) respectively and are connected to the mouthfeel-improving filter cartridge (123);
wherein the mouthfeel-improving filter cartridge (123) is configured to be tubular and has an inner hole configured as the purified-water passage (a3), the first positioning member (127) comprises a first positioning body (1271) and a first position limiting protrusion (1273) provided to the first positioning body (1271), the first positioning body (1271) covers a first end of the mouthfeel-improving filter cartridge (123) adjacent to the central water-collecting pipe (1221), the first position limiting protrusion (1273) is fitted in the inner hole of the mouthfeel-improving filter cartridge (123), the second positioning member (128) comprises a second positioning body (1281) and a second position limiting protrusion (1283) provided to the second positioning body (1281), the second positioning body (1281) is provided to a second end of the mouthfeel-improving filter cartridge (123) away from the central water-collecting pipe (1221), the second position limiting protrusion (1283) is fitted in the inner hole of the mouthfeel-improving filter cartridge (123) and the second position limiting protrusion (1283) has a water hole (1284) running through the second positioning member (128) along an axial direction.

2. The water purification system (100) according to claim 1, further comprising a water-input solenoid valve (3) connected between the booster pump (4) and the pretreated-water inlet (115).

3. The water purification system (100) according to claim 1 or 2, wherein the raw-water inlet (111) and the pretreated-water inlet (115) are located at an upper end of the filter casing (11), the pretreated-water outlet (114), the purified-water outlet (112) and the concentrated-water outlet (113) are located at a lower end of the filter casing (11).

4. The water purification system (100) according to any one of claims 1-3, wherein the mouthfeel-improving filter cartridge (123) is located above the filtering part.

5. The water purification system (100) according to claim 1, wherein a protruding block (1261) is provided between the inner wall of the connecting shell (126) and the mouthfeel-improving filter cartridge (123) so as to space the inner wall of the connecting shell (126) apart from the mouthfeel-improving filter cartridge (123), and a gap between the inner wall of the connecting shell (126) and the mouthfeel-improving filter cartridge (123) is configured as the circulation passage (a2).

6. The water purification system according to claim 1 or 5, wherein the connecting shell (126) is provided with an annular protrusion (1262), and a water-output end of the central water-collecting pipe (1221) is fitted in the annular protrusion (1262).

## Patentansprüche

1. Wasserreinigungssystem (100), das Folgendes umfasst:
eine Stufenfilterpatronenanordnung (1), umfassend ein Filtergehäuse (11) und eine in dem Filtergehäuse (11) angeordnete Stufenfilterpatrone (12), wobei
das Filtergehäuse (11) einen Rohwassereinlass (111), einen Auslass (114) für vorbehandeltes Wasser, einen Einlass (115) für vorbehandeltes Wasser, einen Auslass (112) für gereinigtes Wasser und einen Auslass (113) für konzentriertes Wasser aufweist,
die Stufenfilterpatrone (12) einen Filtrierungsteil und eine Mundgefühlverbesserungs-Filterpatrone (123) umfasst, die entlang einer Oben-Unten-Richtung angeordnet sind, der Filtrierungsteil eine Vorbehandlungs-Filterpatrone (121) und eine Feinfilterpatrone (122) umfasst,
die nacheinander von außen nach innen und voneinander beabstandet angeordnet sind, die Mundegefühlverbesserungs-Filterpatrone (123) ein Aktivkohlefilter ist und mit der Feinfilterpatrone (122) verbunden ist und sich stromabwärts der Feinfilterpatrone (122) befindet, der Auslass (114) für vorbehandeltes Wasser mit einem Wasseraustrittsende der Vorbehandlungs-Filterpatrone (121) in Verbindung steht, der Einlass (115) für vorbehandeltes Wasser mit einem Wassereintrittsende der Feinfilterpatrone (122) in Verbindung steht, wobei die Feinfilterpatrone (122) ein zentrales Wassersammelrohr (1221) und eine um das zentrale Wassersammelrohr (1221) gewickelte Feinfiltermembran (1222) umfasst und der Rohrwassereinlass (111) mit einem Wassereintrittsende der Vorbehandlungs-Filterpatrone (121) in Verbindung steht,
wobei die Stufenfilterpatrone ferner Folgendes umfasst:
eine erste Endabdeckung (124), die dazu konfiguriert ist, eine Ringform aufzuweisen, an einem ersten Ende des Filtrierungsteils angeordnet ist und mit der Vorbehandlungs-Filterpatrone (121) verbunden ist, und
eine zweite Endabdeckung (125), umfassend einen Endabdeckungskörper (1251), der dazu konfiguriert ist, eine Ringform aufzuweisen, und eine Trennplatte (1252), die dazu konfiguriert ist, eine Zylinderform aufzuweisen,
und sich entlang einer Axialrichtung von einem Ende des Endabdeckungskörpers (1251) erstreckt, wobei der Endabdeckungskörper (1251) an einem zweiten Ende des Filtrierungsteils angeordnet ist und mit der Vorbehandlungs-Filterpatrone (121) verbunden ist, sich die Trennplatte (1252) zwischen der Vorbehandlungs-Filterpatrone (121) und der Feinfilterpatrone (122) befindet, um die Vorbehandlungs-Filterpatrone (121) von der Feinfilterpatrone (122) zu trennen, wobei die Mundgefühlverbesserungs-Filterpatrone (123) in dem Endabdeckungskörper (1251) angeordnet ist, die Mundgefühlverbesserungs-Filterpatrone (123) mit dem zentralen Wassersammelrohr (1221) verbunden ist und einen Kanal (a3) für gereinigtes Wasser aufweist, der dazu konfiguriert ist, dass das gereinigte Wasser daraus heraus fließt, der Kanal für gereinigtes Wasser mit dem Auslass (112) für gereinigtes Wasser in Verbindung steht, ein Kanal (a1) für konzentriertes Wasser und ein Umlaufkanal (a2), die nacheinander von außen nach innen angeordnet und voneinander beabstandet sind, zwischen der Mundgefühlverbesserungs-Filterpatrone (123) und der zweiten Endabdeckung (125) definiert sind, der Umlaufkanal mit dem zentralen Wassersammelrohr (1221) in Verbindung steht, und der Auslass (113) für konzentriertes Wasser mit dem Kanal (a1) für konzentriertes Wasser in Verbindung steht;
wobei das Wasserreinigungssystem ferner Folgendes umfasst:
eine Verbindungsschale (126), die in dem Endabdeckungskörper (1251) angeordnet und mit dem zentralen Wassersammelrohr (1221) verbunden ist, wobei der Kanal (a3) für konzentriertes Wasser zwischen der Verbindungsschale (126) und der zweiten Endabdeckung (125) definiert ist, die Mundgefühlverbesserungs-Filterpatrone (123) in der Verbindungsschale (126) angeordnet ist und der Umlaufkanal (a2) zwischen der Mundgefühlverbesserungs-Filterpatrone (123) und einer Innenwand der Verbindungsschale (126) definiert ist;
eine Druckerhöhungspumpe (4) mit einem ersten Ende, das mit dem Auslass (114) für vorbehandeltes Wasser verbunden ist, und einem zweiten Ende, das mit dem Einlass (115) für vorbehandeltes Wasser verbunden ist, wobei die Druckerhöhungspumpe (4) zum Transportieren von aus dem Auslass (114) für vorbehandeltes Wasser fließendem Wasser zu dem Einlass (115) für vorbehandeltes Wasser konfiguriert ist;
ein Abwassermagnetventil (7), das mit dem Auslass (113) für konzentriertes Wasser verbunden ist; und
ein erstes Positionierungselement (127) und ein zweites Positionierungselement (128), wobei das erste Positionierungselement (127) und das zweite Positionierungselement (128) jeweils an einem von zwei axialen Enden der Mundgefühlverbesserungs-Filterpatrone (123) angeordnet sind und mit der Mundgefühlverbesserungs-Filterpatrone (123) verbunden sind;
wobei die Mundgefühlverbesserungs-Filterpatrone (123) dazu konfiguriert ist, röhrenförmig zu sein und ein inneres Loch aufweist, das als der Kanal (a3) für gereinigtes Wasser konfiguriert ist, das erste Positionierungselement (127) einen ersten Positionierungskörper (1271) und einen an dem ersten Positionierungskörper (1271) bereitgestellten ersten Lagebegrenzungsvorsprung (1273) umfasst, der erste Positionierungskörper (1271) ein dem zentralen Wassersammelrohr (1221) benachbartes erstes Ende der Mundgefühlverbesserungs-Filterpatrone (123) abdeckt, der erste Lagebegrenzungsvorsprung (1273) in das innere Loch der Mundgefühlverbesserungs-Filterpatrone (123) eingesetzt ist, das zweite Positionierungselement (128) einen zweiten Positionierungskörper (1281) und einen an dem zweiten Positionierungskörper (1281) bereitgestellten zweiten Lagebegrenzungsvorsprung (1283) umfasst, der zweite Positionierungskörper (1281) an einem von dem zentralen Wassersammelrohr (1221) abgelegenen zweiten Ende der Mundgefühlverbesserungs-Filterpatrone (123) bereitgestellt ist, der zweite Lagebegrenzungsvorsprung (1283) in das innere Loch der Mundgefühlverbesserungs-Filterpatrone (123) eingesetzt ist und der zweite Lagebegrenzungsvorsprung (1283) ein durch das zweite Positionierungselement (128) entlang einer Axialrichtung laufendes Wasserloch (1284) aufweist.

2. Wasserreinigungssystem (100) nach Anspruch 1, ferner umfassend ein Wassereintritts-Magnetventil (3), das zwischen der Druckerhöhungspumpe (4) und dem Einlass (115) für vorbehandeltes Wasser angeschlossen ist.

3. Wasserreinigungssystem (100) nach Anspruch 1 oder 2, wobei sich der Rohwassereinlass (111) und der Einlass (115) für vorbehandeltes Wasser an einem oberen Ende des Filtergehäuses (11) befinden und sich der Auslass (114) für vorbehandeltes Wasser, der Auslass (112) für gereinigtes Wasser und der Auslass (113) für konzentriertes Wasser an einem unteren Ende des Filtergehäuses (11) befinden.

4. Wasserreinigungssystem (100) nach einem der Ansprüche 1-3, wobei sich die Mundgefühlverbesserungs-Filterpatrone (123) über dem Filtrierungsteil befindet.

5. Wasserreinigungssystem (100) nach Anspruch 1, wobei ein vorstehender Klotz (1261) zwischen der Innenwand der Verbindungsschale (126) und der Mundgefühlverbesserungs-Filterpatrone (123) bereitgestellt ist, um die Innenwand der Verbindungsschale (126) in einem Abstand von der Mundgefühlverbesserungs-Filterpatrone (123) zu halten, und ein Spalt zwischen der Innenwand der Verbindungsschale (126) und der Mundgefühlverbesserungs-Filterpatrone (123) als der Umlaufkanal (a2) konfiguriert ist.

6. Wasserreinigungssystem nach Anspruch 1 oder 5, wobei die Verbindungsschale (126) mit einem ringförmigen Vorsprung (1262) versehen ist und ein Wasseraustrittsende des zentralen Wassersammelrohrs (1221) in den ringförmigen Vorsprung (1262) eingesetzt ist.

## Revendications

1. Système de purification d'eau (100), comportant :
un ensemble formant cartouche de filtration composite (1) comportant un boîtier de filtration (11) et une cartouche de filtration composite (12) disposée dans le boîtier de filtration (11), dans lequel
le boîtier de filtration (11) a une entrée d'eau brute (111), une sortie d'eau prétraitée (114), une entrée d'eau prétraitée (115), une sortie d'eau purifiée (112) et une sortie d'eau concentrée (113),
la cartouche de filtration composite (12) comporte une partie filtrante et une cartouche de filtration d'amélioration de sensation en bouche (123) qui sont agencées le long d'une direction allant de haut en bas, la partie filtrante comporte une cartouche de filtration de prétraitement (121) et une cartouche de filtration fine (122) qui sont disposées de manière séquentielle depuis l'extérieur vers l'intérieur et espacées l'une par rapport à l'autre, la cartouche de filtration d'amélioration de sensation en bouche (123) est un filtre à charbon actif et est raccordée à la cartouche de filtration fine (122) et est située au niveau du côté en aval de la cartouche de filtration fine (122), la sortie d'eau prétraitée (114) est en communication avec une extrémité de débouché d'eau de la cartouche de filtration de prétraitement (121), l'entrée d'eau prétraitée (115) est en communication avec une extrémité d'admission d'eau de la cartouche de filtration fine (122), dans lequel la cartouche de filtration fine (122) comporte une tuyau central de collecte d'eau (1221) et une membrane de filtration fine (1222) s'enroulant autour du tuyau central de collecte d'eau (1221), l'entrée d'eau brute (111) est en communication avec une extrémité d'admission d'eau de la cartouche de filtration de prétraitement (121),
la cartouche de filtration composite comportant par ailleurs un premier couvercle d'extrémité (124) configuré pour avoir une forme annulaire, disposé au niveau d'une première extrémité de la partie filtrante et raccordé à la cartouche de filtration de prétraitement (121), et
un deuxième couvercle d'extrémité (125) comportant un corps de couvercle d'extrémité (1251) configuré pour avoir une forme annulaire et une plaque de séparation (1252) configurée pour avoir une forme cylindrique et s'étendant le long d'une direction axiale depuis une extrémité du corps de couvercle d'extrémité (1251), dans lequel le corps de couvercle d'extrémité (1251) est disposé au niveau d'une deuxième extrémité de la partie filtrante et est raccordé à la cartouche de filtration de prétraitement (121), la plaque de séparation (1252) est située entre la cartouche de filtration de prétraitement (121) et la cartouche de filtration fine (122) de manière à séparer la cartouche de filtration de prétraitement (121) de la cartouche de filtration fine (122), dans lequel la cartouche de filtration d'amélioration de sensation en bouche (123) est disposée dans le corps de couvercle d'extrémité (1251), la cartouche de filtration d'amélioration de sensation en bouche (123) est raccordée au tuyau central de collecte d'eau (1221) et a un passage d'eau purifiée (a3) qui est configuré pour faire l'objet d'un écoulement en sortie par l'eau purifiée, le passage d'eau purifiée est en communication avec la sortie d'eau purifiée (112), un passage d'eau concentrée (a1) et un passage de circulation (a2), qui sont agencés de manière séquentielle depuis l'extérieur vers l'intérieur et espacés l'un par rapport à l'autre, sont définis entre la cartouche de filtration d'amélioration de sensation en bouche (123) et le deuxième couvercle d'extrémité (125), le passage de circulation est en communication avec le tuyau central de collecte d'eau (1221), la sortie d'eau concentrée (113) est en communication avec le passage d'eau concentrée (a1) ;
le système de purification d'eau comportant par ailleurs une coquille de raccordement (126) disposée dans le corps de couvercle d'extrémité (1251) et raccordée au tuyau central de collecte d'eau (1221), dans lequel le passage d'eau concentrée (a3) est défini entre la coquille de raccordement (126) et le deuxième couvercle d'extrémité (125), la cartouche de filtration d'amélioration de sensation en bouche (123) est disposée dans la coquille de raccordement (126), et le passage de circulation (a2) est défini entre la cartouche de filtration d'amélioration de sensation en bouche (123) et une paroi intérieure de la coquille de raccordement (126) ;
une pompe de surpression (4) ayant une première extrémité raccordée à la sortie d'eau prétraitée (114) et une deuxième extrémité raccordée à l'entrée d'eau prétraitée (115), dans lequel la pompe de surpression (4) est configurée pour transporter de l'eau s'écoulant hors de la sortie d'eau prétraitée (114) jusqu'à l'entrée d'eau prétraitée (115) ;
une électrovanne d'eau usée (7) raccordée à la sortie d'eau concentrée (113) ; et
un premier élément de positionnement (127) et un deuxième élément de positionnement (128), dans lequel le premier élément de positionnement (127) et le deuxième élément de positionnement (128) sont disposés au niveau de deux extrémités axiales de la cartouche de filtration d'amélioration de sensation en bouche (123) respectivement et sont raccordés à la cartouche de filtration d'amélioration de sensation en bouche (123) ;
dans lequel la cartouche de filtration d'amélioration de sensation en bouche (123) est configurée pour être tubulaire et a un trou intérieur configuré comme étant le passage d'eau purifiée (a3), le premier élément de positionnement (127) comporte un premier corps de positionnement (1271) et une première partie saillante de limitation de position (1273) mise en œuvre sur le premier corps de positionnement (1271), le premier corps de positionnement (1271) recouvre une première extrémité de la cartouche de filtration d'amélioration de sensation en bouche (123) se trouvant de manière adjacente par rapport au tuyau central de collecte d'eau (1221), la première partie saillante de limitation de position (1273) est ajustée dans le trou intérieur de la cartouche de filtration d'amélioration de sensation en bouche (123), le deuxième élément de positionnement (128) comporte un deuxième corps de positionnement (1281) et une deuxième partie saillante de limitation de position (1283) mise en œuvre sur le deuxième corps de positionnement (1281), le deuxième corps de positionnement (1281) est mis en œuvre au niveau d'une deuxième extrémité de la cartouche de filtration d'amélioration de sensation en bouche (123) à l'opposé du tuyau central de collecte d'eau (1221), la deuxième partie saillante de limitation de position (1283) est ajustée dans le trou intérieur de la cartouche de filtration d'amélioration de sensation en bouche (123) et la deuxième partie saillante de limitation de position (1283) a un trou d'eau (1284) traversant le deuxième élément de positionnement (128) le long d'une direction axiale.

2. Système de purification d'eau (100) selon la revendication 1, comportant par ailleurs une électrovanne d'entrée d'eau (3) raccordée entre la pompe de surpression (4) et l'entrée d'eau prétraitée (115).

3. Système de purification d'eau (100) selon la revendication 1 ou la revendication 2, dans lequel l'entrée d'eau brute (111) et l'entrée d'eau prétraitée (115) sont situées au niveau d'une extrémité supérieure du boîtier de filtration (11), la sortie d'eau prétraitée (114), la sortie d'eau purifiée (112) et la sortie d'eau concentrée (113) sont situées au niveau d'une extrémité inférieure du boîtier de filtration (11).

4. Système de purification d'eau (100) selon l'une quelconque des revendications 1 à 3, dans lequel la cartouche de filtration d'amélioration de sensation en bouche (123) est située au-dessus de la partie filtrante.

5. Système de purification d'eau (100) selon la revendication 1, dans lequel un bloc faisant saillie (1261) est mis en œuvre entre la paroi intérieure de la coquille de raccordement (126) et la cartouche de filtration d'amélioration de sensation en bouche (123) de manière à espacer la paroi intérieure de la coquille de raccordement (126) par rapport à la cartouche de filtration d'amélioration de sensation en bouche (123), et un vide entre la paroi intérieure de la coquille de raccordement (126) et la cartouche de filtration d'amélioration de sensation en bouche (123) est configuré comme étant le passage de circulation (a2).

6. Système de purification d'eau selon la revendication 1 ou la revendication 5, dans lequel la coquille de raccordement (126) comporte une partie saillante annulaire (1262), et une extrémité de débouché d'eau du tuyau central de collecte d'eau (1221) est ajustée dans la partie saillante annulaire (1262).
